# EUROPÄISCHE PATENTANMELDUNG

(11) **EP 2 161 461 A2**
(43) Veröffentlichungstag der Anmeldung: **10.03.2010**
(21) Anmeldenummer: 09168612.1
(22) Anmeldetag: 25.08.2009
(51) Int. Cl.: F15B 15/14

(54) **Einrichtung und Kolben zum Aussortieren von Artikeln**

(30) Priorität: 03.09.2008 DE 102008045568
(71) Anmelder: Krones AG, 93073 Neutraubling (DE)
(72) Erfinder: Rauscher, Günter, 93102 Pfatter-Geisling (DE); Dünzinger, Bernhard, 84069 Unterdeggenbach (DE)
(74) Vertreter: Reichert, Werner Franz

(57) **Zusammenfassung**

Es sind eine Einrichtung (1) und ein Kolben (20) zum Aussortieren von Artikeln (3) offenbart. Die Einrichtung (1) umfasst ein Sortierelement (5) mit wenigstens einem Zylinder (10) mit einem Zylindergehäuse (12) und einen im Zylinder (10) geführten Kolben (20), dem mindestens ein Ventil (30) zugeordnet ist. Ein Medium (7) ist über mindestens eine Leitung (40) in den bzw. aus dem Zylinder (10) zu- bzw. abführbar. Das mindestens eine Ventil (30) wirkt mit der mindestens einen Leitung (40) hartdichtend und ein Gehäusedichtelement (16) wirkt hartdichtend mit einem Kolbendichtelement (26) zusammen. Der Kolben (20) kann in einer Einrichtung (1) zum Aussortieren von Flüssigkeitsbehältern verwendet werden.

## Beschreibung

Die vorliegende Erfindung betrifft eine Einrichtung zum Aussortieren von Artikeln. Die Erfindung betrifft insbesondere eine Einrichtung zum Aussortieren von Artikeln aus einer Vielzahl von Artikeln auf einem Transportband. Dabei läuft die Vielzahl der Artikel an einer Detektionseinheit in einer Transportrichtung des Transportbandes vorbei. Dem Transportband ist ein Sortierelement zugeordnet, das wenigstens einen Zylinder mit einem Zylindergehäuse und einen im Zylinder geführten Kolben umfasst, dem mindestens ein Ventil zugeordnet ist. Über eine Steuerung ist ein Medium über mindestens eine Leitung in den bzw. aus dem Zylinder zu- bzw. abführbar. Das mindestens eine Ventil und die mindestens eine Leitung wirken hartdichtend zusammen. Der Kolben ist in den bzw. aus dem Zylinder in einer Kolbenrichtung entlang einer Gleitfläche des Zylindergehäuses bewegbar. An der Gleitfläche des Zylindergehäuses ist ein hartdichtendes Gehäusedichtelement und an dem Kolben ist ein Kolbendichtelement angeordnet.

Die vorliegende Erfindung betrifft auch einen Kolben zum Aussortieren von Artikeln. Die Erfindung betrifft insbesondere einen Kolben zum Aussortieren von Artikeln, wobei der Kolben in einem Zylinder mit einem Zylindergehäuse in einer Kolbenrichtung entlang einer Gleitfläche des Zylindergehäuses bewegbar ist. An der Gleitfläche des Zylindergehäuses ist ein hartdichtendes Gehäusedichtelement und an dem Kolben ist ein Kolbendichtelement angeordnet.
Die vorliegende Erfindung betrifft darüber hinaus eine Verwendung des Kolbens in einer Einrichtung zum Aussortieren von Flüssigkeitsbehältern.

Flüssigkeitsbehälter wie Flaschen oder Getränkedosen, werden durch Streckblasen aus Vorformlingen in Blasformen in einer Streckblaseinrichtung hergestellt. Sowohl die Vorformlinge als auch die daraus hergestellten Flüssigkeitsbehälter werden üblicherweise inspiziert und fehlerhafte Exemplare werden aussortiert, beispielsweise durch Erkennen, Auswerten und Ausstoßen der fehlerhaften Exemplare aus einer auf einem Transportband laufenden Serie solcher Vorformlinge oder Flüssigkeitsbehälter.

Aus dem deutschen Patent DE 102 59 589 B3 ist ein Verfahren zum Herstellen von Hohlkörpern aus Kunststoff durch Streckblasen von erwärmten Vorformlingen offenbart, wobei die Vorformlinge vor dem Erwärmen kontrolliert und fehlerhafte Vorformlinge ausgeschieden werden. Dabei wird zumindest ein Teil der fehlerhaften Vorformlinge erwärmt und erst nach dem Erwärmen ausgeschieden, vorzugsweise durch eine von einer Kontrollstation steuerbaren Sortierstation und eine Auswertungseinrichtung der Kontrollstation.

Aus dem deutschen Gebrauchsmuster DE 201 14 032 U1 ist eine Vorrichtung zum Aussondern von fehlerhaften Vorformlingen offenbart. Die Vorrichtung umfasst ein steuerbares, direkt auf die Vorformlinge einwirkendes Sortierorgan. Das Sortierorgan drängt den Vorformling im Wesentlichen in axialer Richtung und damit den Halskragen eines einzelnen Vorformlings gegen eine Tragfläche für den Vorformling. Eine Auswertungseinrichtung steuert einen stationären Pneumatikzylinder mit einer Kolbenstange. Erhält das Sortierorgan durch die Auswertungseinrichtung ein Aussonderungssignal, so wird ein Stößel durch den Pneumatikzylinder aus seiner Ruheposition impulsartig nach unten in seine Ausstoßposition und wieder zurück in seine Ruheposition bewegt. Dabei trifft der Stößel auf den Kopf des jeweiligen Vorformlings auf, drückt diesen nach unten und sortiert diesen damit aus.

Aus dem deutschen Patent DE 195 16 403 C2 ist eine Vorrichtung zum wahlweisen Überführen von auf einer ersten Förderbahn transportierten Flaschen auf eine zweite Förderbahn offenbart. Die Vorrichtung umfasst einen auf einem geradlinigen Weg hin- und her beweglich gelagerten Stößel, der durch eine Antriebseinrichtung in die Bewegungsbahn der Flaschen einfährt und dabei einer bestimmten Flasche einen quer zur Transportrichtung gerichteten Bewegungsimpuls verleiht. Der Stößel weist beim Einfahren in die Bewegungsbahn der Gegenstände eine nach unten gerichtete Bewegungskomponente auf. Vorzugsweise ist der Stößel an der Kolbenstange eines schräg nach unten gerichteten Pneumatikzylinders befestigt und zwischen zwei senkrechten parallelen Platten beweglich geführt, zwischen denen auch der Pneumatikzylinder befestigt ist.

Aus dem deutschen Patent DE 27 04 614 ist eine Vorrichtung zum Verteilen von aufrecht Flaschen mit einem ersten und einem weiteren Transportstern und einem Ein- und Auslaufkanal offenbart. Verfahrbare Kolben sind zum Schieben der Flaschen entweder in den Auslaufkanal des ersten Transportsterns oder in einen Auslaufkanal des zweiten Transportsterns entsprechend des angesteuerten Kolbens.

Aus der deutschen Patentanmeldung DE 36 31 879 ist eine Vorrichtung zum Aussortieren von fehlerhaften Flaschen offenbart. Eine Ablenkeinrichtung in Form einer Schraubspirale, die von einer Erkennungsstation für fehlerhafte Flaschen angesteuert wird, erteilt der Flasche einen Bewegungsimpuls quer zur Bandlaufrichtung. Die Ablenkeinrichtung weist eine motorisch antreibbare Welle mit einem Bürstensegment auf, dessen Kontur auf einer in Bandlaufrichtung ansteigenden Schraubspirale liegt.

Aus dem deutschen Patent DE 32 04 114 C2 ist eine Vorrichtung zum Sortieren von aufrecht stehenden Flaschen offenbart. An einer Seite einer horizontalen Förderfläche ist ein steuerbarer Abweiser angeordnet, beispielsweise ein pneumatisch betätigter Stößel, der bestimmte Flaschen von einer ersten Förderbahn auf eine dazu parallele zweite Förderbahn ablenkt. Eine an der anderen Seite der Förderfläche angeordnete Leitfläche weist einen seitlich neben der Förderfläche liegenden, gegenüber der Senkrechten geneigten Fangbereich auf, der zusammen mit einem am Flaschenboden angreifenden Stützelement über den Rand der Förderfläche abkippende Flaschen in einer stabilen Schräglage hält. Im Fangbereich ist mindestens ein an den schrägstehenden Flaschen angreifendes, in Richtung der zweiten Förderbahn laufendes Transportorgan vorgesehen.

Aus dem europäischen Patent EP 1 079 120 B1 ist eine Druckluftwartungseinheit und aus dem deutschen Patent DE 102 47 869 B4 ist ein druckmediumsbetätigter Arbeitszylinder offenbart, die Basistechnologien für Aussortierelemente als Zylinder-Ventileinheiten bei Vorrichtungen zum Aussortieren fehlerhafter Vorformlinge oder Flaschen veranschaulichen.
Bei modernen Anlagen für das Aussortieren von Artikeln, beispielsweise von fehlerhaften Vorformlingen oder Flüssigkeitsbehältern wie Flaschen oder Getränkedosen, steigen die Anforderungen an die Taktzahl des Durchsatzes bzw. Aussortierens der Artikel in solch einer Anlage. In der Anlage sollen die Artikel schnell transportiert, verarbeitet und aussortiert werden. Das Aussortieren geschieht beispielsweise mittels der eingangs beschriebenen Sortierelemente, die Zylinder, Zylindergehäuse, Ventile und in den Zylindern geführte Kolben umfassen. Die Kolbendichtelemente für die Kolben sind gemäß dem Stand der Technik weichdichtend ausgebildet. Weichdichtende Materialien weisen relativ hohe Reibungskoeffizienten auf, was die Taktzahl nach oben nachteilhaft beschränkt. Zudem werden weichdichtende Materialien schnell spröde, reißen und werden durchlässig für das Medium, das über die Ventile in oder aus dem Zylinder geleitet wird. Außerdem gleitet ein unebenes, aufgerautes und mit Erhebungen, Absprüngen u. ä. versehenes Kolbendichtelement langsamer entlang der Gleitfläche des Zylindergehäuses als ein unbeschädigtes Kolbendichtelement. Die Haltbarkeitsdauer des beschädigten Kolbendichtelements und damit die des Kolbens verringert sich. Als weiterer Nachteil von weichdichtenden Materialien für die Dichtelemente im Bereich des Kolbens erweist sich, dass zum Vermeiden der Aufrauhung der weichdichtenden Materialien Schmiermittel, wie beispielsweise Öle verwendet werden, die aufgrund der schnellen Bewegung des Kolbens verharzen und damit wiederum die Gleitfähigkeit herabsetzen. Insgesamt leidet somit die Funktionalität des Aussortierens der Artikel und die Taktzahl der Bewegungen des Kolbens und damit die der gesamten Anlage.

Aufgabe der Erfindung ist daher, eine Einrichtung zum Aussortieren von Artikeln zu schaffen, die mit einer höheren Taktzahl als Einrichtungen des gleichen technischen Gebiets einzelne Artikel aus einer Serie von Artikeln ausstößt, zuverlässiger arbeitet und eine geringere Störanfälligkeit aufweist.

Die obige Aufgabe wird durch eine Einrichtung gelöst, die die Merkmale des Patentanspruchs 1 umfasst.

Eine weitere Aufgabe der Erfindung ist, einen Kolben zum Aussortieren von Artikeln zu schaffen, der mit einer höheren Taktzahl als Kolben des gleichen technischen Gebiets Artikel aus einer Serie ausstößt, zudem zuverlässiger arbeitet und eine geringere Störanfälligkeit aufweist.

Die obige Aufgabe wird durch einen Kolben gelöst, der die Merkmale des Patentanspruchs 8 umfasst.

Eine weitere Aufgabe der Erfindung ist, eine Verwendung für solch einen Kolben anzugeben.

Die obige Aufgabe wird durch eine Verwendung gelöst, die die Merkmale des Patentanspruchs 12 umfasst.

Wie oben bereits beschrieben, läuft eine Vielzahl von Artikeln an einer Detektionseinheit aus dem Stand der Technik in einer Transportrichtung des Transportbandes vorbei. Die Detektionseinheit bestimmt fehlerfreie und fehlerhafte Artikel, die aussortiert werden sollen. Dem Transportband ist ein Sortierelement zugeordnet, das wenigstens einen Zylinder mit einem Zylindergehäuse und einen im Zylinder geführten Kolben umfasst. Dem Kolben ist mindestens ein Ventil zugeordnet, so dass über eine Steuerung ein Medium, beispielsweise ein Gasgemisch, über mindestens eine Leitung in den bzw. aus dem Zylinder zu- bzw. abführbar ist. Das mindestens eine Ventil und die mindestens eine Leitung wirken hartdichtend zusammen.

Durch das Zuführen oder Entnehmen des Mediums aus dem Zylinder ist der Kolben in den bzw. aus dem Zylinder in einer Kolbenrichtung entlang einer Gleitfläche des Zylindergehäuses bewegbar. An der Gleitfläche des Zylindergehäuses ist ein hartdichtendes Gehäusedichtelement und an dem Kolben ist ein Kolbendichtelement angeordnet. Jeweils zwei Flächen reiben bzw. gleiten also aneinander, wenn der Kolben bewegt wird. Die Oberfläche des Kolbendichtelements des Kolbens wirkt dabei mit der Gleitfläche des Zylindergehäuses zusammen. Ist nun gemäß der vorliegenden Erfindung das Kolbendichtelement ebenfalls hartdichtend ausgebildet, so erhöht das vorteilhaft die Taktzahl beim Aussortieren der Artikel im Vergleich zu Kolbendichtelementen mit weichdichtendem Dichtmaterial. Der Reibungskoeffizient von hartdichtendem Material ist niedriger, wodurch eine bessere Gleitfähigkeit und damit höhere Taktzahl bezüglich des Aussortierens der Artikel mit dem Kolben erreicht wird. Zudem ist hartdichtendes Material strapazierfähiger und hat eine höhere Haltbarkeit, was einen weiteren Vorteil der Erfindung darstellt. Außerdem wird bei der Verwendung von hartdichtendem Material für die Dichtelemente kein Öl zur Schmierung der Gleitflächen benötigt, so dass eine Verharzung des Öls an den Gleitflächen und damit unebene Gleitflächen vermieden werden.

Entsprechend ist es vorteilhaft, wenn das mindestens eine Ventil und die Leitung ebenfalls hartdichtend zusammenwirken, denn auch hier reiben bzw. gleiten jeweils zwei Flächen aneinander, wenn das jeweilige Ventil bewegt wird. Dazu sollten jeweils zusammenwirkende Paare von Ventildichtelementen und Leitungsdichtelementen aus einem hartdichtenden Material sein. Die Leitungsdichtelemente sind an den Leitungen ausgebildet und die Ventildichtelemente sind an den Ventilen ausgebildet.

In einer Ausführungsform der Erfindung besteht mindestens eines der Dichtelemente am Zylindergehäuse, Kolben, Ventil und/oder Leitung aus einem metallischen Material, beispielsweise aus Stahl, insbesondere auch aus Edelstahl. Alternativ können die Dichtelemente aus teflonisiertem Aluminium, Keramik und/oder Kunststoff bestehen. Diese Materialien sind bekannt als reaktionsträge, mit geringen Reibungskoeffizienten, geringer Haftung an anderen Materialien, beständig und somit als stabile Materialien bei andauernder Reibung dieser Materialien geeignet und sorgen somit für eine hohe Taktzahl bzgl. des Aussortierens von Artikeln.

Aus Gründen der besseren Haltbarkeit sollte das Material von jeweils zusammenwirkenden Paaren der oben beschriebenen Dichtelemente vorzugsweise dieselbe Härte aufweisen, beispielsweise indem Paare von Dichtelementen aus demselben Material bestehen. Insbesondere die einer hohen Reibungsbelastung ausgesetzten Paare von Kolben- und Gehäusedichtelementen sollten aus demselben Material bestehen. Aus Preisgründen können natürlich auch alle Dichtelemente aus demselben Material bestehen. Aus demselben Grund und aus Kostengründen kann der Kolben zugleich das Kolbendichtelement darstellen, Kolben und Kolbendichtelement bilden bei dieser Ausführungsform also eine Einheit.
Weiter sei empfohlen, das Zylindergehäuse aufgrund der hohen Reibungsbelastung mit dem Kolben aus einem beständigen Material herzustellen, beispielsweise aus Edelstahl (VA-Stahl) oder einem beständigen Kunststoff, beispielsweise Grivory HT.

Entsprechend der erfindungsgemäßen Einrichtung ist ein erfindungsgemäßer Kolben zum Aussortieren von Artikeln vorgesehen mit den oben beschriebenen Eigenschaften und Ausführungsformen.

Der erfindungsgemäße Kolben wird vorzugsweise in einer Einrichtung zum Aussortieren von Flüssigkeitsbehältern, beispielsweise Getränkeflaschen oder -dosen, verwendet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.

Figur 1 zeigt einen schematischen Querschnitt durch einen Zylinder für eine Einrichtung aus dem Stand der Technik zum Aussortieren von Artikeln.

Figur 2 zeigt einen schematischen Querschnitt durch einen Zylinder für eine erfindungsgemäße Einrichtung zum Aussortieren von Artikeln.

Figur 3 zeigt eine schematische Ansicht einer Ausführungsform eines Zylinders, der bei der erfindungsgemäßen Einrichtung Verwendung findet.

Figur 4 zeigt eine schematische Draufsicht einer erfindungsgemäßen Einrichtung zum Aussortieren von Artikeln.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Einrichtung oder das erfindungsgemäße Verfahren ausgestaltet sein können und stellen keine abschließende Begrenzung da.

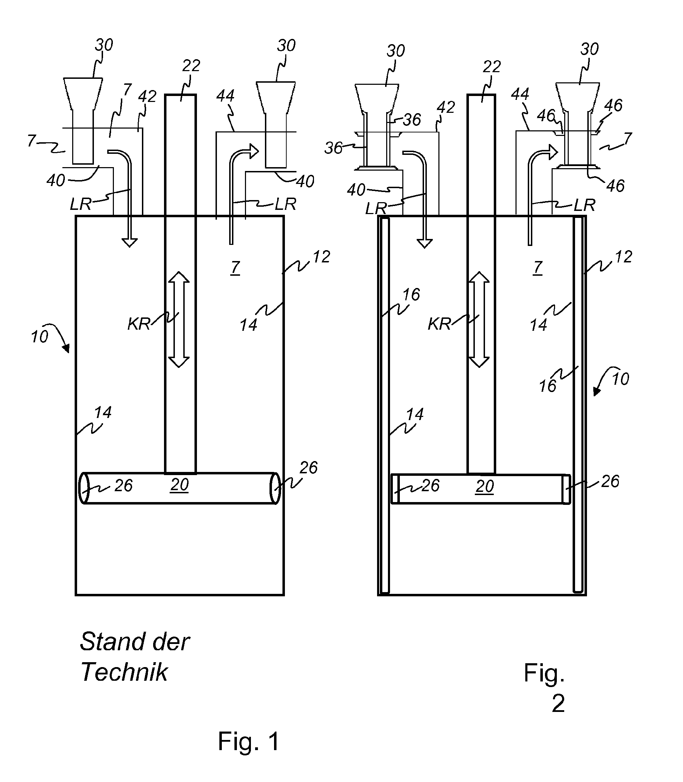

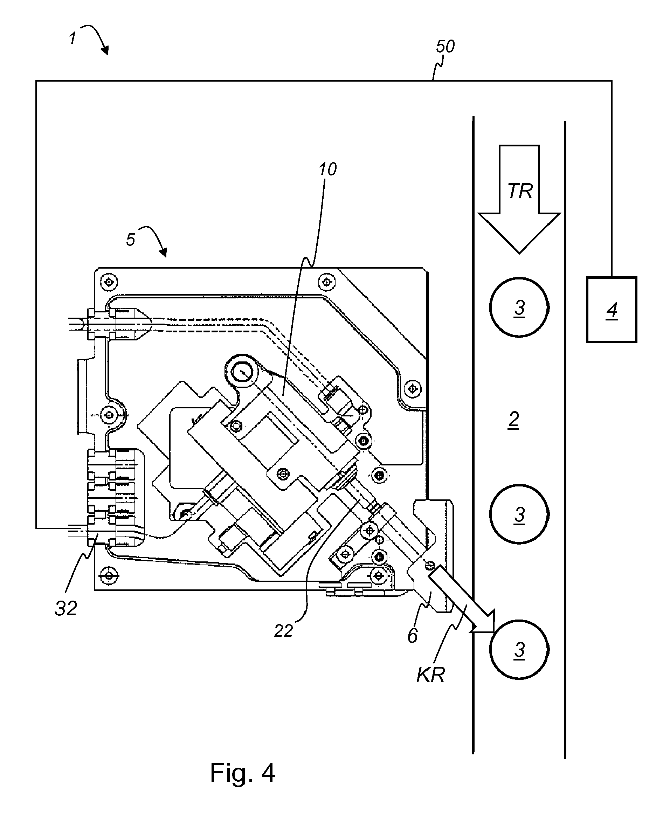

Figur 1 zeigt schematisch einen Querschnitt durch einen Zylinder 10 für eine Einrichtung 1 aus dem Stand der Technik zum Aussortieren von Artikeln 3 (beides nicht dargestellt, siehe Figur 4). Der Zylinder 10 ist Teil eines Sortierelements 5 (nicht dargestellt, siehe Figur 4) der Einrichtung 1.

Im Inneren des Zylinders 10 befindet sich ein Kolben 20 mit einer Kolbenstange 22, die in Kolbenrichtung KR in bzw. aus den Zylinder 10 bewegt werden. Die Kolbenstange 22 stößt als fehlerhaft detektierte Artikel 3 von einem Transportband 2 (nicht dargestellt, siehe Figur 4). Teile der Innenwand des Zylindergehäuses 12 dienen als Gleitfläche 14 für den Kolben 20. Gemäß dem Stand der Technik ist der Kolben 20 an seinen beiden Kontaktenden mit dem Zylindergehäuse 12 jeweils mit einem weichdichtenden Kolbendichtelement 26 versehen. Der Kolben 20 mitsamt der Kolbenstange 22 gleitet in Kolbenrichtung KR entlang den beiden Gleitflächen 14 des Zylindergehäuses 12 auf- bzw. ab, abhängig davon ob ein Medium 7 ab- oder zugeführt wird. In der hier dargestellten Ausführungsform ist der Zylinder 10 mit zwei Ventilen 30 verbunden, eines zum Einführen des Mediums 7 in einer Leitungsrichtung LR über eine Leitung 40 in den Zylinder 10, das andere Ventil 30 zum Ausführen des Mediums 7 aus dem Zylinder 10 über eine andere Leitungsrichtung LR in eine andere Leitung 40. Entsprechend ist in der einen Leitung 40 eine Zuleitung 42 für das Medium 7 zu dem Zylinder 10 und in der anderen Leitung 40 ist eine Ableitung 44 für das Medium 7 aus dem Zylinder 10 ausgebildet.

Figur 2 zeigt einen schematischen Querschnitt durch einen Zylinder 10 für eine erfindungsgemäße Einrichtung 1 zum Aussortieren von Artikeln 3. Im Unterschied zu Figur 1 ist das Kolbendichtelement 26 aus einem hartdichtenden Material aus den oben bereits ausführlich beschriebenen Gründen. Passend dazu und wie ebenfalls oben ausführlich beschrieben sind an den Innenwänden des Zylindergehäuses 12 des Zylinders 10 zu jedem der beiden Kolbendichtelemente 26 jeweils ein Gehäusedichtelement 16 aus einem ebenfalls hartdichtenden Material angebracht. Die Kolbendichtelemente 26 gleiten mit der Auf- bzw. Abbewegung des Kolbens 20 entlang den Gehäusedichtelementen 16.

Bevorzugt sind, wie oben bereits ausführlich beschrieben, an den Kontaktstellen der Leitungen 40 mit den Ventilen 30 entsprechend ebenfalls Ventildichtelemente 36 und Leitungsdichtelemente 46 angeordnet, die miteinander zusammenwirken, so dass keine bzw. definierte Mengen des Mediums 7 durch die jeweilige Leitung 40 bewegt wird. Vorzugsweise sind die Dichtelemente 36, 46 aus einem hartdichtenden Material.

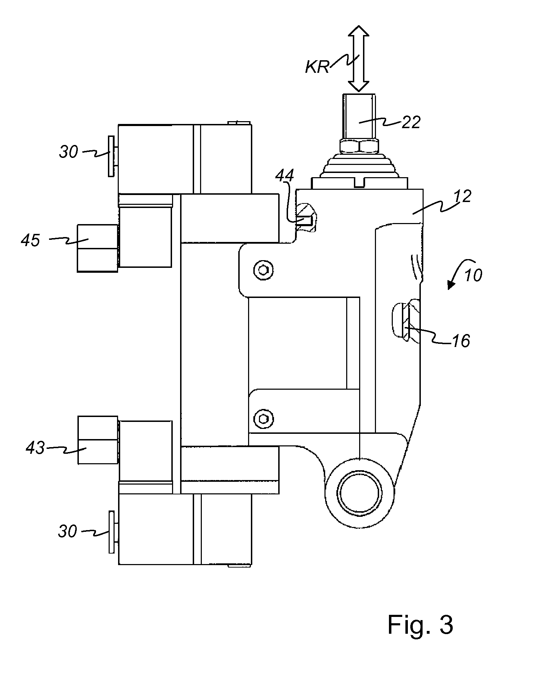

Figur 3 zeigt eine schematische Ansicht einer Ausführungsform eines Zylinders 10, der bei der erfindungsgemäßen Einrichtung 1 Verwendung findet. An den Außenseiten des Zylinders 10 sind ein Anschluss 43 für die Zuleitung 42 des Mediums 7 und ein Anschluss 45 für die Ableitung 44 des Mediums 7 vorgesehen. Über die beiden Ventile 30 wird die Menge des zu- bzw. abzuführenden Mediums 7 passend zur gesteuerten Bewegung des Kolbens 20 eingestellt. Die Lage des Gehäusedichtelements 16 ist durch einen Durchbruch im Zylindergehäuse 12 angedeutet. Aus dem Zylinder ragt die Kolbenstange 22 des Kolbens 20 (nicht sichtbar in Figur 3, da durch das Zylindergehäuse 12 verdeckt).

Figur 4 zeigt eine schematische Draufsicht der erfindungsgemäßen Einrichtung 1 zum Aussortieren der Artikel 3. Eine Vielzahl der Artikel 3 wird auf dem Transportband 2 in einer Transportrichtung TR transportiert. Fehlerhafte Artikel 3 werden mit einer Detektionseinheit 4 ermittelt, die Ergenisdaten der Detektionseinheit 4 über eine Detektorleitung 50 an ein Sortierelement 5 weitergeleitet, das die fehlerhaften Artikel 3 über die Kolbenstange 22 des Kolbens 20 (nicht sichtbar in Figur 4) und sich daran anschließende Elemente weiter bis über eine Pusherplatte 6 in Richtung KR stößt. Die Richtung KR ist in einem spitzen Winkel zur Transportrichtung TR angebracht. Die mit dem Sortierelement 5 derart ausgestoßenen Artikel 3 fallen vom Transportband 2. Mit den vorteilhaften erfindungsgemäßen Kolbendichtelementen 26 aus hartdichtendem Material hat der Kolben 20 sehr kurze Reaktionszeiten, so dass das Aussortieren der jeweiligen Artikel 3 schnell durchgeführt werden kann.

Das Sortierelement 5 umfasst neben dem Kolben 20 und der Kolbenstange 22 den Zylinder 10 und die Ventile 30 mit den oben bereits beschriebenen weiteren Elementen. Über die Steuerung 32 wird die Dosierung des Mediums 7 für die Zu- bzw. Abfuhr in die Ventile 30 gesteuert.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Insbesondere kann der Zylinder 10 mit weniger oder mehr Ventilen 30 und Leitungen 40 verbunden sein und das Transportband 2 eine oder mehr Bahnen umfassen, ohne den Schutzbereich der nachstehenden Ansprüche zu verlassen.

## Patentansprüche

1. Einrichtung (1) zum Aussortieren von Artikeln (3), wobei auf einem Transportband (2) eine Vielzahl der Artikel (3) an einer Detektionseinheit (4) in einer Transportrichtung (TR) des Transportbandes (4) vorbeiläuft, wobei dem Transportband (4) ein Sortierelement (5) zugeordnet ist, das wenigstens einen Zylinder (10) mit einem Zylindergehäuse (12) und einen im Zylinder (10) geführten Kolben (20) umfasst, dem mindestens ein Ventil (30) zugeordnet ist, so dass über eine Steuerung (32) ein Medium (7) über mindestens eine Leitung (40) in den bzw. aus dem Zylinder (10) zu- bzw. abführbar ist, wobei das mindestens eine Ventil (30) und die mindestens eine Leitung (40) hartdichtend zusammenwirken und wodurch der Kolben (20) in den bzw. aus dem Zylinder (10) in einer Kolbenrichtung (KR) entlang mindestens einer Gleitfläche (14) des Zylindergehäuses (12) bewegbar ist, und dass an der mindestens einen Gleitfläche (14) des Zylindergehäuses (12)jeweils ein hartdichtendes Gehäusedichtelement (16) und an dem Kolben (20) mindestens ein Kolbendichtelement (26) angeordnet sind, **dadurch gekennzeichnet, dass** das mindestens eine Kolbendichtelement (26) ebenfalls hartdichtend ausgebildet ist.

2. Einrichtung (1) nach Anspruch 1, **dadurch gekennzeichnet, dass** die mindestens eine Leitung (40) mindestens eine Zuleitung (42) bzw. Ableitung (44) für das Medium (7) umfasst, in die jeweils ein Ventil (30) angeordnet ist, wobei der Leitung (40) mindestens ein Leitungsdichtelement (46) und dem Ventil (30) mindestens ein Ventildichtelement (36) zugeordnet ist, die beide hartdichtend sind.

3. Einrichtung (1) nach einem der Ansprüche 1 bis 2, **dadurch gekennzeichnet, dass** mindestens eines der Dichtelemente (16, 26, 36, 46) aus Stahl bestehen.

4. Einrichtung (1) nach einem der Ansprüche 1 bis 2, **dadurch gekennzeichnet, dass** mindestens eines der Dichtelemente (16, 26, 36, 46) aus teflonisiertem Aluminium oder aus einem Kunststoff oder aus Keramik besteht.

5. Einrichtung (1) nach einem der Ansprüche 1 bis 4, **dadurch gekennzeichnet, dass** das Kolbendichtelement (26) und das Gehäusedichtelement (16) aus demselben Material bestehen.

6. Einrichtung (1) nach einem der Ansprüche 1 bis 5, **dadurch gekennzeichnet, dass** das Ventildichtelement (36) und das Leitungsdichtelement (46) aus demselben Material bestehen.

7. Einrichtung (1) nach einem der Ansprüche 1 bis 6, **dadurch gekennzeichnet, dass** der Kolben (20) zugleich das Kolbendichtelement (26) darstellt.

8. Kolben (20) zum Aussortieren von Artikeln (3), wobei der Kolben (20) in einem Zylinder (10) mit einem Zylindergehäuse (12) in einer Kolbenrichtung (KR) entlang einer Gleitfläche (14) des Zylindergehäuses (12) bewegbar ist, wobei an der Gleitfläche (14) des Zylindergehäuses (12) ein hartdichtendes Gehäusedichtelement (16) und an dem Kolben (20) ein Kolbendichtelement (26) angeordnet sind, **dadurch gekennzeichnet, dass** das Kolbendichtelement (26) hartdichtend ausgebildet ist.

9. Kolben (20) nach Anspruch 8, **dadurch gekennzeichnet, dass** die Dichtelemente (16, 26) aus Stahl bestehen.

10. Kolben (20) nach Anspruch 8, **dadurch gekennzeichnet, dass** die Dichtelemente (16, 26) aus teflonisiertem Aluminium oder aus Kunststoff oder aus Keramik bestehen.

11. Kolben (20) nach einem der Ansprüche 8 bis 10, **dadurch gekennzeichnet, dass** der Kolben (20) zugleich das Kolbendichtelement (26) bildet.

12. Verwendung eines Kolbens (20) nach Anspruch 8 in einer Einrichtung (1) zum Aussortieren von Flüssigkeitsbehältern.
